# EUROPEAN PATENT SPECIFICATION

(11) **EP 0 432 942 B1**
(45) Date of publication and mention of the grant of the patent: **05.04.1995**
(21) Application number: 90312988.0
(22) Date of filing: 29.11.1990
(51) Int. Cl.: A22C 13/00

(54) **Sausage casings**
Wursthülle
Boyaux de saucisses

(30) Priority: 12.12.1989 JP 143970/89
(43) Date of publication of application: 19.06.1991
(73) Proprietor: NIHON TOKKYO KANRI COMPANY LIMITED, Tokyo (JP)
(72) Inventor: Inagaki, Hiromichi, Inuyama-shi, Aichi-ken (JP)
(74) Representative: King, James Bertram

(56) References cited:
- EP-A- 0 050 702
- DE-A- 2 655 253
- DE-U- 8 804 813
- DE-U- 8 814 343
- FR-E- 62 153
- GB-A- 2 126 191
- US-A- 4 729 410

## Description

This invention relates to casings for sausages and the like products, which casings comprise a plastics film that is used for containing the foodstuff forming the sausage filling which is then cooked, for example by immersion in boiling water.

In a particular embodiment this invention relates to a plastic film forming a casing for a sausage which comprises chopped meat such as ham. The chopped ham is packed into an elongate casing which may comprise a nylon material with the ends pinched together and closed off by means of clips. The sausage is then put into a container wherein it is boiled, following which the casing is opened up and the product removed for slicing by a cutter into individual portions forming the product.

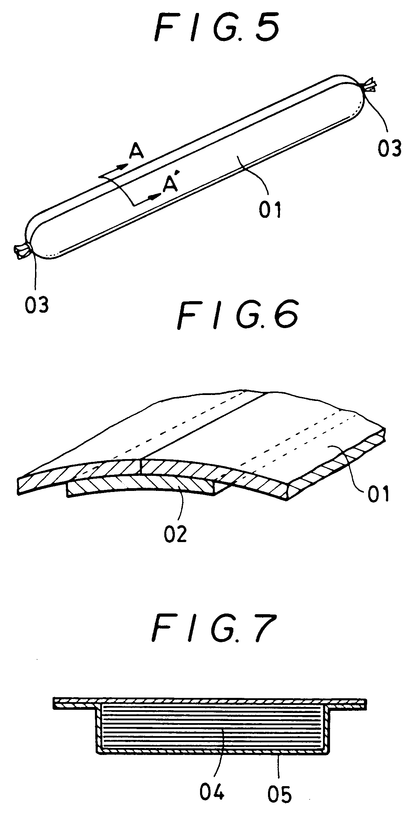

In the accompanying drawings, Figure 5 shows a prior art arrangement wherein chopped meat or the like product is packed into an elongate casing 01 which is formed into a cylindrical shape by appropriately curving a nylon film and overlapping both longitudinal sides which are secured by means of a tape 02. Figure 6 shows generally the way in which the overlapping long sides are joined. The casing is closed off by means of metal clips 03 which are located around a pinch at each end of the elongate casing.

Figure 7 of the accompanying drawings shows a further prior arrangement in which the sliced meat product 04 is accommodated within a sealed container 05 serving for protection for distribution to retail outlets.

US-A-4729410 discloses a sausage casing wherein longitudinal sides are brought into abutment and joined by a heat sealing method using a tape connected over the whole width. The object is to ensure that the casing may swell without splitting and to avoid pockets in which fluid may collect.

When it is required to slice the meat product such as ham, then this is removed from the casing 01 after the boiling process but in view of the length of the casing (up to about 1 metre) it can prove difficult to break open the plastic material. Methods using a cutter are known but there is a risk of marking the surface of the ham during the cutting of the casing. Therefore, generally, the casing 01 is peeled away from the product manually by starting at one or other end of the casing which is cut off using a suitable cutting device. This process is time consuming and furthermore the casing cannot be removed by spirally peeling due to the presence of the tape 02.

It is one of the objects of this invention to overcome the aforementioned disadvantage and to provide a casing for a sausage or the like product which may be broken open easily after the cooking process so as to remove the interior product.

A further object of this invention is to provide a casing in which the product can be removed without marking or damage. From DE-U-88 04 813 a casing and a method according to the preambles of Claims 1 and 6 are known. However, they only allow a tearing of the casing in a right angle to the longitudinal direction of the sausage.

According to this invention there is provided a casing for a sausage comprising a film of which the longer sides are brought together into abutment to form a cylindrical shape to contain the filling product, with the ends being pinched together and sealed, the longer sides being joined over their length by an overlying tape which has been connected, by heat sealing, to the sides over part of the tape width only, whereby the heat seal is such that the unconnected part of the tape may be grasped to pull away the connected part of tape from the casing sides in a longitudinal direction to permit the casing to be opened up along the abutment and removed from the product.

This invention provides also a method of opening a sausage casing wherein the longer sides of an elongate sheet of plastics material are brought together into abutment to form a cylindrical tube with a tape overlying the abutment zone and securing the sides along the join, and the tape is applied externally to the join and heat sealed over part of the join only leaving at least one edge of the tape free, whereby the casing is removed by grasping the free edge of the tape and pulling same away from the casing in a longitudinal direction to allow the casing to be opened along the abutment.

This invention is further described and illustrated by way of embodiments shown as examples in the accompanying drawings. In the drawings:
- Figure 1: shows a section through part of a casing according to this invention,
- Figure 2: shows the casing being opened,
- Figure 3: shows a section through another embodiment,
- Figure 4: shows the casing of Figure 3 being opened,
- Figure 5: shows a complete sausage (prior art),
- Figure 6: shows a section on line A-A of Figure 6, and
- Figure 7: shows a prior art sliced meat in a sealed container for distribution.

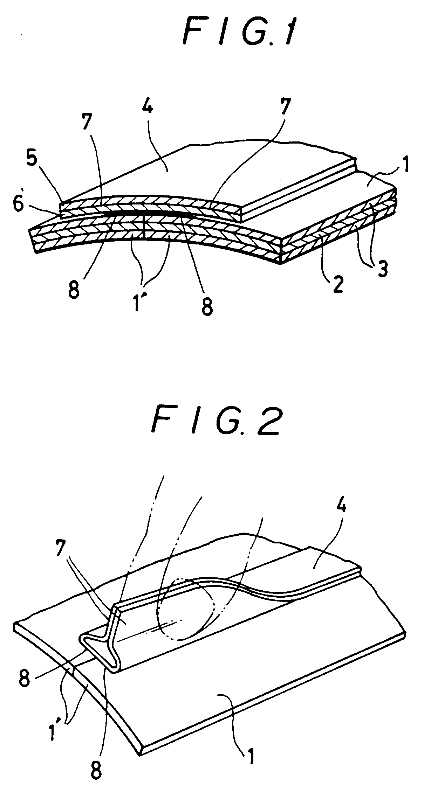

One embodiment of this invention is shown in Figure 1, wherein 1 is a sausage casing comprising a triple layer with a polyethylene film 3 adhered onto both sides of a shrinkable nylon film 2 and wherein the long sides 1' have been curved and brought into abutment with a tape overlapping the join. The tape 4 has a polyethylene film 5 adhered to an outer nylon film 5, the film 6 having been heat-sealed at 8 onto the outside of the butted joint with an unsealed area 7 being left to both the sides.

The ends of the casing thus formed are sealed by clips (as in Figure 5) after the casing is filled with the product.

Figure 2 shows how the casing 1 is broken open after cooking (boiling) and after the ends of the casing have been cut off. To effect this the unsealed area 7 of tape 4 is grasped to pull the tape 4 in a longitudinal direction. The tape 4 can be peeled off easily from the casing 1 at the heat seal area 8. As a result and because the casing 1 is released entirely over the whole length from both the sides 1' the product is exposed and can be taken out and sliced into retail products.

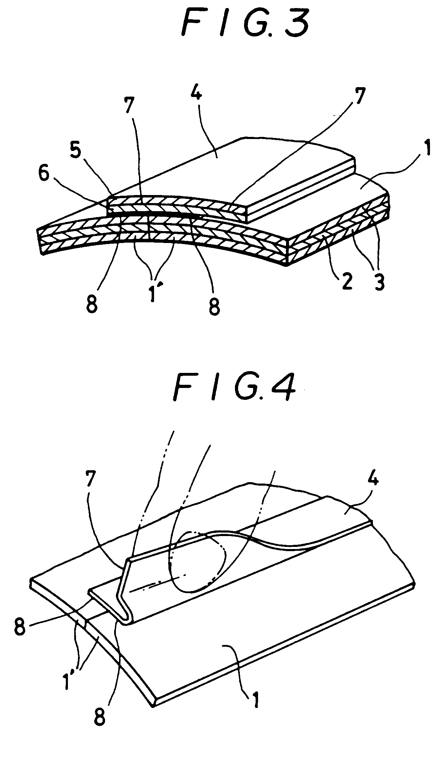

Figures 3 and 4 show another embodiment, which has an unsealed area 7 formed only on one side of tape 4. Because the unsealed area 7 of tape 4 is curled by the heat during the usual boiling, this curled portion can be grasped easily by the fingers.

The casing of this invention is formed into a cylindrical shape by heat sealing using the tape which can be grasped by the unsealed area to peel off the tape easily to break open the casing. As a result, the work becomes very much simpler and a single casing can be opened in seconds in the case of a one metre long casing.

Further, because the tape can be grasped and pulled away for separation, there is no need for marking a cut line and as a result, there is no fear of marking or damaging the ham with the cutter.

Moreover, because the unsealed area has been formed along the entire tape, the separation can be continued even if the tape is broken part way through the removal.

## Claims

1. A casing for a sausage comprising a film (1) of which the longer sides (1') are brought together into abutment to form a cylindrical shape to contain the filling product, with the ends being pinched together and sealed (03),
the longer sides (1') being joined over their length by an overlying tape (4) which has been connected, by heat sealing, to the sides (1') over part of the tape width only, characterised in that the heat seal is such that the unconnected part (7) of the tape may be grasped to pull away the connected part of tape (4) from the casing sides (1') in a longitudinal direction to permit the casing (1) to be opened up along the abutment and removed from the product.

2. A casing according to Claim 1, characterised in that an unconnected part (7) of the tape is provided each side of a medial connected part (8) overlying the sides (1') at the join.

3. A casing according to Claim 1, characterised in that the unconnected part (7) of the tape is provided at one side of the connected part (8) overlying the sides (1') at the join.

4. A casing according to any preceding claim, characterised in that the casing (1) comprises a laminate with a first outer plastics material (3) and at least one second inner plastics material (2), the tape (4) comprising a laminate having a first (6) and second (5) plastics material, both said first plastic materials (3,6) being connected over part of their width (8) by a heat seal which is capable of release on application of manual force.

5. A casing according to Claim 4, characterised in that said first materials (3,6) comprise a polyethylene and said second materials (2,5) comprise nylon.

6. A method of opening a sausage casing wherein the longer sides (1') of an elongate sheet of plastics material (1) are brought together into abutment to form a cylindrical tube with a tape (4) overlying the abutment zone and securing the sides along the join, wherein the tape (4) is applied externally to the join (1') and heat sealed over part (8) of the join only leaving at least one edge (7) of the tape (4) free, characterised by removing the casing (1) by grasping the free edge (7) of the tape (4) and pulling same away from the casing in a longitudinal direction to allow the casing (1) to be opened along the abutment.

## Patentansprüche

1. Eine Wursthülle, umfassend einen Film (1), dessen längere Seiten (1') zusammengeführt werden, so daß sie aneinander angrenzen, um eine als Behältnis für das Einfüllprodukt dienende zylindrische Form zu bilden, und zwar werden die Enden (03) zusammengekniffen und gesiegelt, während die längeren Seiten (1') ihrer Länge nach mit Hilfe eines oberhalb befindlichen Streifens (4) miteinander verbunden werden, der durch Heißsiegeln nur über einen Teil der Streifenbreite an den Seiten (1') angeschlossen wurde, dadurch gekennzeichnet, daß die Heißsiegelung so beschaffen ist, daß der nicht angeschlossene Teil (7) des Streifens erfaßt werden kann, um den angeschlossenen Teil des Streifens (4) in Längsrichtung von den Hüllenseiten (1') zu ziehen, so daß die Hülle (1) entlang der Stoßfuge geöffnet und von dem Produkt entfernt werden kann.

2. Eine Hülle nach Anspruch 1, dadurch gekennzeichnet, daß ein nicht angeschlossener Teil (7) des Streifens zu beiden Seiten eines mittleren angeschlossenen Teils (8) vorgesehen wird, der oberhalb der Seiten (1') an der Verbindungsstelle angeordnet ist.

3. Eine Hülle nach Anspruch 1, dadurch gekennzeichnet, daß der nicht angeschlossene Teil (7) des Streifens an einer Seite des oberhalb der Seiten (1') an der Verbindungsstelle befindlichen angeschlossenen Teils (8) vorgesehen wird.

4. Eine Hülle nach einem der vorstehenden Ansprüche, dadurch gekennzeichnet, daß die Hülle (1) einen Schichtstoff mit einem ersten äußeren Kunststoffmaterial (3) und mindestens einem zweiten inneren Kunststoffmaterial (2) umfaßt, während der Streifen (4) einen Schichtstoff mit einem ersten Kunststoffmaterial (6) und einem zweiten Kunststoffmaterial (5) umfaßt, und zwar werden beide der besagten ersten Kunststoffmaterialien (3, 6) über einen Teil ihrer Breite (8) durch Heißsiegeln miteinander verbunden, wobei die Heißsiegelung durch Ausüben einer manuellen Kraft gelöst werden kann.

5. Eine Hülle nach Anspruch 4, dadurch gekennzeichnet, daß die besagten ersten Materialien (3, 6) Polyäthylen und die besagten zweiten Materialien (2, 5) Nylon umfassen.

6. Eine Methode zum Öffnen einer Wursthülle, bei der die längeren Seiten (1') eines länglichen Blattes von Kunststoffmaterial (1) zusammengeführt werden, so daß sie aneinander angrenzen, um einen zylindrischen Schlauch zu bilden, wobei sich ein Streifen (4) oberhalb des Stoßfugenbereichs befindet und der besagte Streifen die Seiten entlang der Verbindungsstelle befestigt, während der Streifen (4) außen auf die Verbindungsstelle (1') aufgebracht und nur über einen Teil (8) der Verbindungsstelle heißgesiegelt wird, so daß mindestens ein Rand (7) des Streifens (4) frei bleibt, dadurch gekennzeichnet, daß die Hülle (1) dadurch entfernt wird, daß man den freien Rand (7) des Streifens (4) erfaßt und in Längsrichtung von der Hülle abzieht, so daß die Hülle (1) entlang der Stoßfuge geöffnet werden kann.

## Revendications

1. Boyau pour saucisse constitué d'une pellicule (1) dont les côtés longs (1') sont rapprochés bout à bout pour constituer une forme cylindrique devant contenir le produit de remplissage, les extrémités étant pincées et scellées (03), les côtés longs (1') étant joints sur toute leur longueur par une bande recouvrante (4) qui a été reliée, par scellage à chaud, aux côtés (1') sur une partie de la largeur de la bande seulement, caractérisé en ce que le scellage à chaud est tel que la partie non reliée (7) de la bande peut être saisie pour éloigner la partie reliée de la bande (4) des côtés du boyau (1') dans une direction longitudinale pour permettre au boyau (1) d'être ouvert le long du joint bout à bout et retiré du produit.

2. Boyau selon Revendication 1, caractérisé en ce qu'une partie non reliée (7) de la bande est prévue de chaque côté d'une partie reliée médiane (8) recouvrant les côtés (1') au niveau du joint.

3. Boyau selon Revendication 1, caractérisé en ce que la partie non reliée (7) de la bande est prévue d'un côté de la partie reliée (8) recouvrant les côtés (1') du joint.

4. Boyau selon l'une quelconque des revendications précédentes, caractérisé en ce que le boyau (1) comprend un feuilleté avec une première matière plastique extérieure (3) et au moins une deuxième matière plastique intérieure (2), la bande (4) comprenant un feuilleté ayant une première (6) et une deuxième (5) matières plastiques, les deux premières matières plastiques (3,6) étant reliées sur une partie de leur largeur (8) par un scellage à chaud pouvant être ouvert sous l'application d'une force manuelle.

5. Boyau selon Revendication 4, caractérisé en ce que lesdites premières matières (3,6) comprennent un polyéthylène et lesdites deuxièmes matières (2,5) comprennent du nylon.

6. Méthode d'ouverture d'un boyau pour saucisse dans laquelle les côtés longs (1') d'une feuille de matière plastique allongée (1) sont rapprochés bout à bout pour former un tube cylindrique avec une bande (4) recouvrant la zone du joint et fixant les côtés le long du joint, dans laquelle la bande (4) est appliquée extérieurement sur le joint (1') et scellée thermiquement sur une partie (8) du joint pour ne laisser libre qu'au moins un bord (7) de la bande (4), caractérisée par l'enlèvement du boyau (1) en saisissant le bord libre (7) de la bande (4) et en la tirant pour la séparer du boyau dans une direction longitudinale pour permettre l'ouverture du boyau (1) le long du joint.
